# EUROPEAN PATENT APPLICATION

(11) **EP 2 747 069 A1**
(43) Date of publication of application: **25.06.2014**
(21) Application number: 13198095.5
(22) Date of filing: 18.12.2013
(51) Int. Cl.: G09G 5/10, G06F 1/32, G06F 3/14

(54) **Device and method for controlling screen according to data loading in terminal**

(30) Priority: 21.12.2012 KR 20120150942
(71) Applicant: Samsung Electronics Co., Ltd, Gyeonggi-do 443-742 (KR)
(72) Inventor: Jo, Dae-Young, 443-742 Gyeonggi-do (KR)
(74) Representative: Nederlandsch Octrooibureau

(57) **Abstract**

A device for controlling a screen according to data loading in a terminal is provided. The device includes a display whose screen brightness value is changed step by step while data is being loaded, and a controller configured to control to change, if data information is requested, a screen brightness value of the display step by step according to progress of data loading, and to control to display the data being loaded, on the display whose screen brightness value is changed step by step.

## Description

### BACKGROUND OF THE INVENTION

### Field of the Invention

The present invention relates to a device and method for controlling a screen according to data loading in a terminal. More particularly, the present invention relates to a screen control device and method capable of intuitively displaying progress of data loading and also reducing current consumption.

### Description of the Related Art

Nowadays, data communications are possible on portable terminals. In particular, data usage has been significantly increased due to the prevalence of smart devices such as smart phones.
Despite the download rate that has been increasingly improved, it takes a large amount of time for data to load due to a trend of increased amounts of data to load. Also, the amount of time for data to load depends on the data communication environment.
In particular, high-capacity data such as images, photos and videos requires a significant amount of loading time. At present, users may not recognize the correct information about the data loading time.

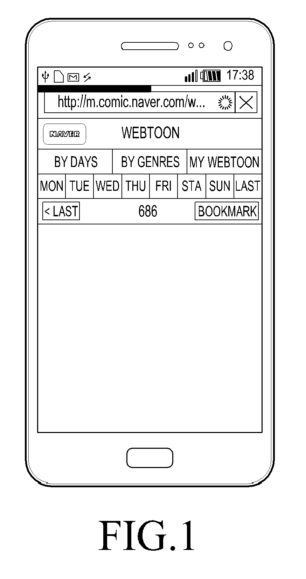

FIG. 1 illustrates a data loading screen of a terminal in an Internet application mode according to the related art.
As illustrated in FIG. 1, while loading data upon a request for data information in an Internet application mode, a terminal may display a screen which is less than clear to its user, because the data that the user actually wants is not displayed.
During the data loading time, which is the time the user waits until the data is fully loaded, the screen is turned on at all times and appears to be in a stationary state, causing an increase in the waiting time that the user experiences.
The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a screen control device and method capable of intuitively displaying progress of data loading and also reducing current consumption.
Another aspect of exemplary embodiments of the present invention is to provide a screen control device and method capable of controlling a screen using a User Interface (UI) during data loading so that a user may wait for the completion of the data loading without feeling bored, and also to reduce current consumption. In accordance with an aspect of the present invention, a device for controlling a screen according to data loading in a terminal is provided. The device includes a display whose screen brightness value is changed step by step while data is being loaded, and a controller configured to control to change, if data information is requested, a screen brightness value of the display step by step according to progress of data loading, and to control to display the data being loaded, on the display whose screen brightness value is changed step by step.
In accordance with another aspect of the present invention, a method for controlling a screen according to data loading in a terminal is provided. The method includes changing a screen brightness value of a display step by step according to progress of data loading, if data information is requested, and displaying the data being loaded, on the display whose screen brightness value is changed step by step.
Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 illustrates a data loading screen of a terminal in an Internet application mode according to the related art;
FIG. 2 illustrates a functional configuration of a terminal, according to an exemplary embodiments of the present invention;
FIG. 3 is a flowchart illustrating a process of controlling a screen during a data loading operation in a terminal according to a first exemplary embodiment of the present invention;
FIGS. 4A to 4E are diagrams for a description of the process in FIG. 3 according to exemplary embodiments of the present invention;
FIG. 5 is a flowchart illustrating a process of controlling a screen during a data loading operation in a terminal according to a second exemplary embodiment of the present invention; and
FIGS. 6A to 6E are diagrams for a description of the process in FIG. 5 according to exemplary embodiments of the present invention.
Throughout the drawings, like reference numerals will be understood to refer to like parts, components, and structures.

### DETAILED DESCRIPTION OF THE EXEMPLARY EMBODIMENTS

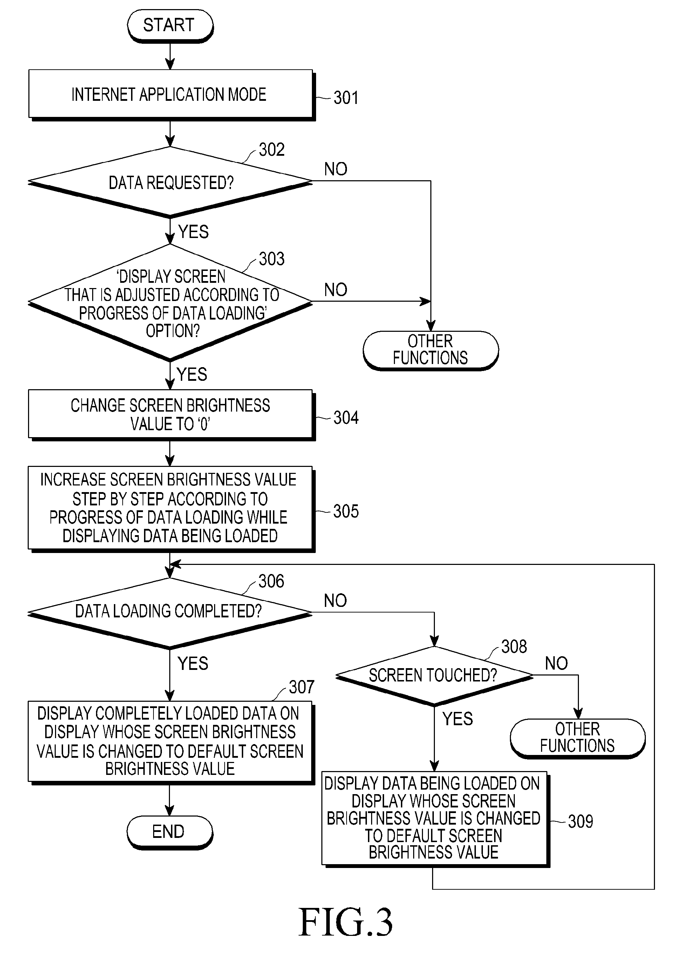

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions are omitted for clarity and conciseness.
The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.
It is to be understood that the singular forms "a," "an," and "the" include plural referents unless the context clearly dictates otherwise. Thus, for example, reference to "a component surface" includes reference to one or more of such surfaces.
Terminals, to which exemplary embodiments of the present invention are applicable, may include portable terminals and fixed terminals. These portable terminals, easy-to-carry mobile electronic devices, may include video phones, mobile phones, smart phones, International Mobile Telecommunication-2000 (IMT-2000) terminals, Wideband Code Division Multiple Access (WCDMA) terminals, Universal Mobile Telecommunication Service (UMTS) terminals, Personal Digital Assistants (PDAs), Portable Multimedia Players (PMPs), Digital Multimedia Broadcasting (DMB) terminals, e-Book readers, portable computers (for example, laptop computers, tablet computers, etc.), digital cameras and the like. The fixed terminals may include desktop Personal Computers (PCs) or the like.

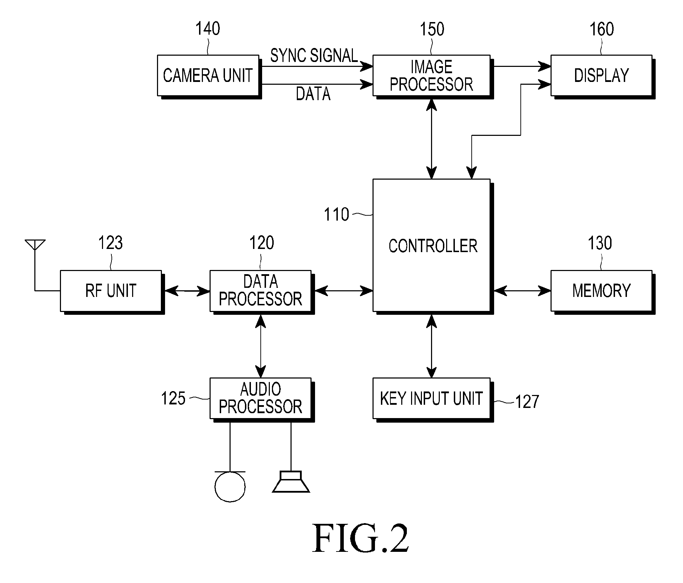

FIG. 2 illustrates a functional configuration of a terminal, according to exemplary embodiments of the present invention.
Referring to FIG. 2, a Radio Frequency (RF) unit 123 is responsible for wireless communication of the terminal. The RF unit 123 may include an RF transmitter for up-converting a frequency of transmission signals and amplifying the up-converted transmission signals, and an RF receiver for low-noise-amplifying received signals and down-converting a frequency of the amplified received signals. A data processor 120 may include a transmitter for encoding and modulating the transmission signals, and a receiver for demodulating and decoding the received signals. Specifically, the data processor 120 may be comprised of a modulator/demodulator (modem) and a coder/decoder (codec). The codec may include a data codec for processing data signals such as packet data, and an audio codec for processing audio signals such as voice. An audio processor 125 may play received audio signals output from the audio codec in the data processor 120 using a speaker SPK, or transfer transmission audio signals picked up by a microphone MIC to the audio codec in the data processor 120.
A key input unit 127 may include letter/number keys for inputting letter/number information, and function keys for setting various functions.
A memory 130 may be comprised of a program memory and a data memory. The program memory may store programs for controlling applications for controlling the overall operations of the terminal, and programs for changing a screen brightness value step by step depending on the progress of data loading while displaying the data being loaded. The data memory may temporarily store the data which is created during execution of the programs.
A controller 110 controls the overall operation of the terminal.
In accordance with an exemplary embodiment of the present invention, upon a request for data information in a specific application mode, the controller 110 changes a screen brightness value of a display 160 step by step according to the progress of data loading, and displays the data being loaded on the display 160 whose screen brightness value is changed step by step.
Upon the request for data information in the specific application mode, the controller 110 determines whether a 'display a screen that is adjusted according to a progress of data loading' option is set, and changes the screen brightness value of the display 160 step by step according to the progress of data loading, if the 'display a screen that is adjusted according to a progress of data loading' option is set.
If data information is requested on the display 160 whose screen brightness value is set to a default screen brightness value, the controller 110 first changes the screen brightness value of the display 160 to zero or '0', to blank the screen of the display 160. Next, the controller 110 increases the screen brightness value of the display 160 step by step according to the progress of data loading, and displays the data being loaded on the display 160 whose screen brightness value is changed or increased step by step.
If a touch action occurs on the display 160 while changing the screen brightness value of the display 160 step by step according to the progress of data loading and displaying the data being loaded, the controller 110 changes the screen brightness value of the display 160 to the default screen brightness value and displays the data being loaded on the display 160 whose screen brightness value is changed to the default screen brightness value.
While changing the screen brightness value of the display 160 step by step according to the progress of data loading and displaying the data being loaded, the controller 110 may display a progress bar indicating the progress of data loading in a predetermined area on the display 160.
In addition, the controller 110 may change the screen brightness value of the display 160 step by step according to the progress of data loading, by changing a predetermined transparency value applied to the screen of the display 160 step by step while the data is being loaded.
Furthermore, the controller 110 may change the screen brightness value of the display 160 step by step according to the progress of data loading, by changing predetermined pixel values applied to the screen of the display 160 step by step while the data is being loaded.
If the data loading is completed while changing the screen brightness value of the display 160 step by step according to the progress of data loading and displaying the data being loaded, the controller 110 may change the screen brightness value of the display 160 to the default screen brightness value, and display the completely loaded data.
A camera unit 140 may include a camera sensor for capturing image data and converting the captured optical image signal into an electrical image signal, and a signal processor for converting the analog image signal captured by the camera sensor, into digital image data. The camera sensor is assumed to be a Charge Coupled Device (CCD) or Complementary Metal Oxide Semiconductor (CMOS) sensor, and the signal processor may be implemented with a Digital Signal Processor (DSP). The camera sensor and the signal processor may be implemented integrally or separately.
An image processor 150 performs Image Signal Processing (ISP) to display the image signals output from the camera unit 140, on the display 160. The ISP may include various functions such as gamma correction, interpolation, spatial variation, image effects processing, image scaling, Automatic White Balancing (AWB), Automatic Exposure (AE), Automatic Focusing (AF) and so on. The image processor 150 processes the image signals output from the camera unit 140, in units of frames, and outputs the frame image data according to the properties and size of the display 160. The image processor 150, which includes a video codec, may compress the frame image data displayed on the display 160, or decompress the compressed frame image data into its original frame image data, using a predetermined video coding scheme. The video codec may be a Joint Photography Experts Group (JPEG) codec, a Moving Picture Experts Group 4 (MPEG4) codec or a Wavelet codec. Provided that an On-Screen Display (OSD) function is provided, the image processor 150 may output OSD data according to the size of the displayed screen, under control of the controller 110.
The display 160 displays, on its screen, the image signals output from the image processor 150 and the user data output from the controller 110. The display 160 may employ a Liquid Crystal Display (LCD). In this case, the display 160 may include an LCD controller, a memory for storing image data, and an LCD panel. If implemented as a touch-screen LCD, the LCD may serve as an input unit, and keys like those on the key input unit 127 may be displayed on the display 160.
If the display 160 is used as a touch screen unit as it is implemented as a touch-screen display, the touch screen unit is comprised of a Touch Screen Panel (TSP) including multiple sensor panels. The sensor panels may include a capacitive sensor panel capable of sensing figure touches, and an electromagnetic induction sensor panel capable of sensing fine touches such as touches by a stylus pen.
In accordance with an exemplary embodiment of the present invention, the display 160 may change its screen brightness value step by step according to the progress of data loading while displaying the data being loaded.
If a touch action occurs on the display 160 while the controller 110 is changing the screen brightness value of the display 160 step by step according to the progress of data loading and displaying the data being loaded, the display 160 may display the data being loaded, after changing its screen brightness value to the default screen brightness value.
If the data loading is completed, the display 160 displays the completely loaded data after changing its screen brightness value to the default screen brightness value.
Reference will now be made to FIGS. 3 to 6, to describe an operation of displaying the progress of data loading and reducing the current consumption in the aforementioned terminal.

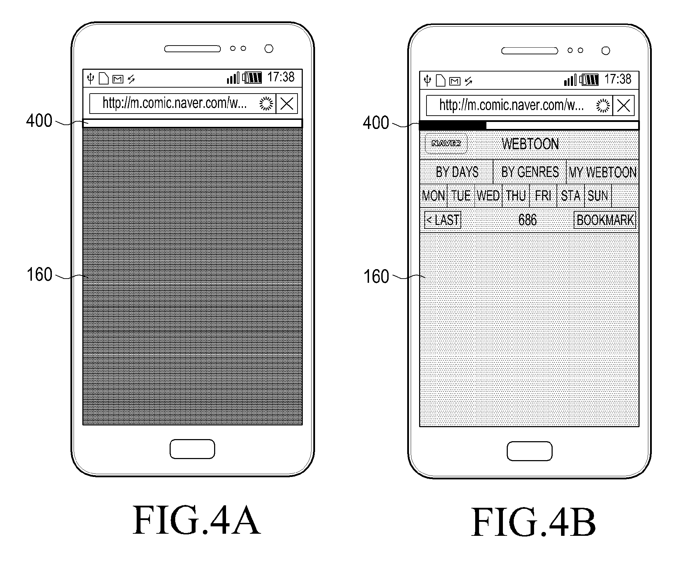

FIG. 3 is a flowchart illustrating a process of controlling a screen during a data loading operation in a terminal according to a first exemplary embodiment of the present invention, and FIGS. 4A to 4E are diagrams for a description of the process in FIG. 3 according to exemplary embodiments of the present invention. The first exemplary embodiment of the present invention will be described in detail with reference to FIGS. 2, 3 and 4A to 4E.
Referring to FIG. 3, upon a request for specific data in the Internet application mode in a step 301, the controller 110 determines in step 302 whether specific data is requested. If the specific data is not requested, another function is performed. If the specific data is requested, the controller 110 determines in step 303 whether a 'display a screen that is adjusted according to a progress of data loading' option is set in the terminal. In the Internet application mode, a screen brightness value of the display 160 is set to a default screen brightness value.
If the 'display a screen that is adjusted according to a progress of data loading' option is not set in the terminal in step 303, another function is performed. If the 'display a screen that is adjusted according to a progress of data loading' option is set in the terminal in step 303, the controller 110 changes the screen brightness value step by step according to the progress of data loading during the data loading while displaying the data being loaded.
In step 304, the controller 110 first changes the screen brightness value to zero or '0', to blank the screen of the display 160.
Next, in step 305, the controller 110 increases the screen brightness value of the display 160 step by step according to the progress of the data loading while displaying the data being loaded, on the display 160.
In step 305, the controller 110 may check the progress of data loading, extract a predetermined screen brightness value corresponding to the progress of data loading, and change the screen brightness value of the display 160 to the extracted screen brightness value, thereby making it possible to increase the screen brightness value of the display 160 with the progress of the data loading. As an option to change the screen brightness value of the display 160, the controller 110 may change the screen brightness value of the display 160 step by step according to the progress of data loading by means of a backlight unit that can control the screen brightness of the display 160.
As another option, the controller 110 may set different pixel values associated with different screen brightness levels, and change the screen transparency of the display 160 step by step by changing the pixel values applied to the screen according to the progress of data loading.
For example, assuming that pixel values (i.e., Red (R), Green (G) and Blue (B) values) for the default screen brightness value are 100, 80 and 60 respectively, and the screen brightness corresponding to the progress of the data loading is set in 10 steps, upon a request for data, the controller 110 first sets the screen brightness value of the display 160 to zero or '0', to blank the screen of the display 160. Thereafter, the controller 110 may increase the screen brightness value of the display 160 step by step to increase the screen transparency by changing the RGB values according to the progress of data loading, as follows.

R: 10, 20, 30, ...

G: 8, 16, 24, ...

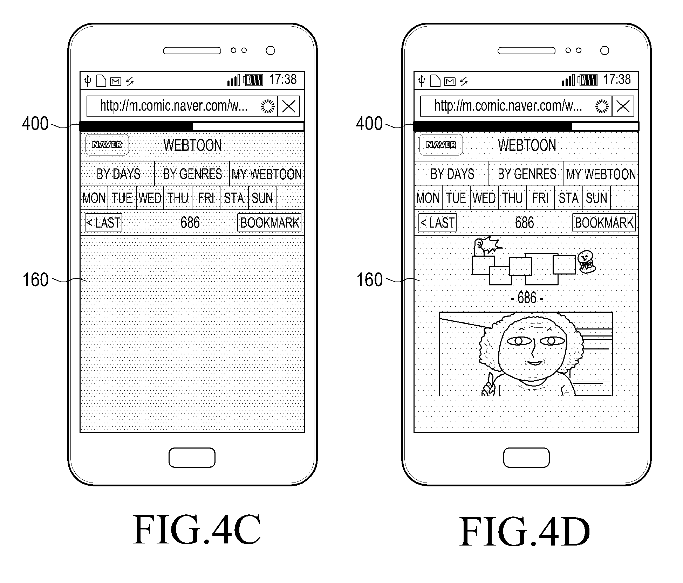

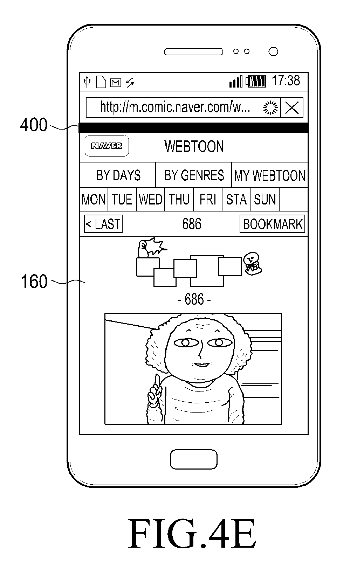

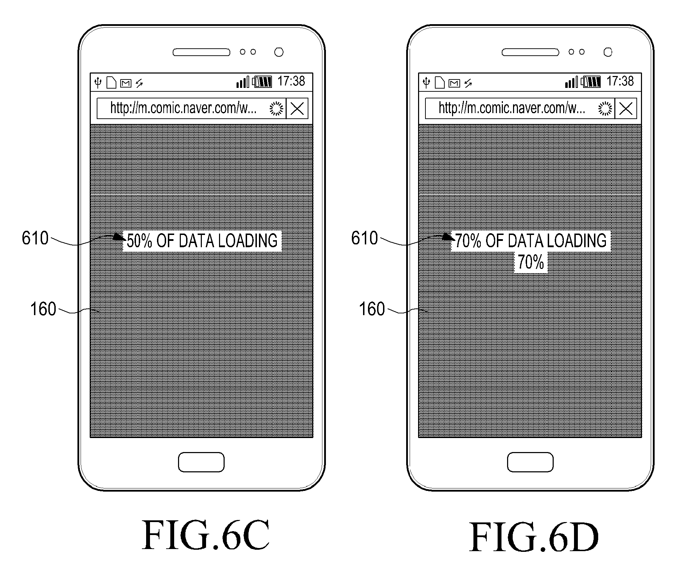

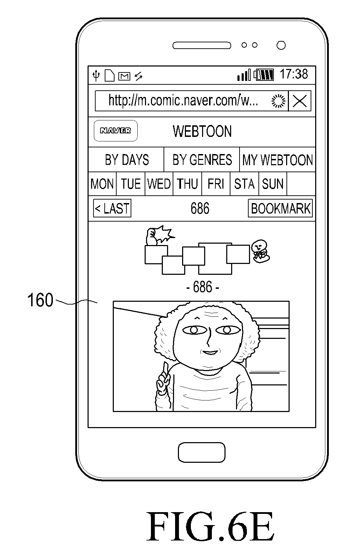

B : 6, 12, 18, ...
If the data loading is completed while increasing the screen brightness value of the display 160 step by step according to the progress of data loading and displaying the data being loaded, on the display 160 in the step 305, the controller 110 determines in step 306 whether the data loading is completed. If the data loading is completed, the controller 110 changes the screen brightness value of the display 160 back to the default screen brightness value and displays the completely loaded data on the display 160, in step 307. Optionally, if the data loading is completed, the controller 110 may inform the user of the completion of data loading by generating vibrations.
If a touch action occurs on the display 160 while increasing the screen brightness value of the display 160 step by step according to the progress of data loading and displaying the data being loaded, on the display 160 in the step 305, the controller 110 determines in step 308 whether the screen is touched. If the screen is not touched, another function is performed. If the screen is touched, the controller 110 changes the screen brightness value of the display 160 back to the default screen brightness value and displays the data being loaded, on the display 160 in step 309. Thereafter, the controller 110 returns to step 306. Optionally, the controller 110 may inform the user, of its displaying the data being loaded on the display 160 whose screen brightness value is set to the default screen brightness value, by generating vibrations.
While changing the screen brightness value according to the progress of data loading and displaying the data being loaded, during the data loading, the controller 110 may display a rod-shaped progress bar indicating the progress of data loading in a predetermined position (for example, the upper side) of the display 160.
FIGS. 4A to 4E illustrate an operation of changing a screen brightness value according to the progress of data loading and displaying the data being loaded during the data loading according to an exemplary embodiment of the present invention.
Upon request for data in the Internet application mode where the screen brightness value of the display 160 is set to the default screen brightness value, the controller 110 changes the screen brightness value to zero or '0' to blank the screen of the display 160, as shown in FIG. 4A. Thereafter, if the progress of data loading becomes, for example, 30%, with the execution of the data loading operation, then the controller 110 changes the screen brightness value of the display 160 to a screen brightness value which is set to correspond to the current progress, 30%, of data loading, and displays the data presently being loaded, on the display 160 having the changed screen brightness value, as shown in FIG. 4B.
Subsequently, if the progress of data loading becomes, for example, 50%, then the controller 110 changes the screen brightness value of the display 160 to a screen brightness value which is set to correspond to the current progress, 50%, of data loading, and displays the data presently being loaded, on the display 160 having the changed screen brightness value, as shown in FIG. 4C.
Next, if the progress of data loading becomes, for example, 70%, then the controller 110 changes the screen brightness value of the display 160 to a screen brightness value which is set to correspond to the current progress, 70%, of data loading, and displays the data presently being loaded, on the display 160 having the changed screen brightness value, as shown in FIG. 4D.
Finally, if the data loading is completed, the controller 110 changes the screen brightness value of the display 160 back to the default screen brightness value and displays the completely loaded data on the display 160 whose screen brightness value is changed to default screen brightness value, as shown in FIG. 4E.
As can be seen from FIGS. 4A to 4E, while increasing the screen brightness value of the display 160 step by step according to the progress of data loading and displaying the data being loaded, during the data loading, the controller 110 may display a rod-shaped progress bar 400 indicating the progress of data loading, on the upper side of the display 160.
In fact, the current draw for the default screen brightness value of the display 160, which is generally set in the terminal as shown in FIG. 4E, is, for example, 210mA, and the current draw for the screen brightness value of the display 160, which is set in the terminal when the screen brightness value of the display 160 is set to zero or '0' as shown in FIG. 4A, is for example, 70mA.
With regard to an increment of the battery standby time due to the decrease in current consumption, the difference between the current draw of the existing screen and the current draw of the proposed screen is 210-70 = 140mA, and since the screen gets brighter step by step during the data loading, an average decrement of the current consumption may be 140mA/2 = 70mA.
If it is assumed that an average data loading time per data request is 3 seconds, a data request occurs about three times per minute, and the terminal is used about three hours a day, then the current decrement improved during the day is 70 (average decrement of current consumption) x 3 (average loading time) x 3 (the number of data requests per minute) x 60 (minutes) x 3 (hours per day) = 113400mA.
If average standby power of the terminal is assumed to be 2mA, an increment of the standby time due to the decrement of the current consumption can be 113400/(2*3600) = 15.75 hours.

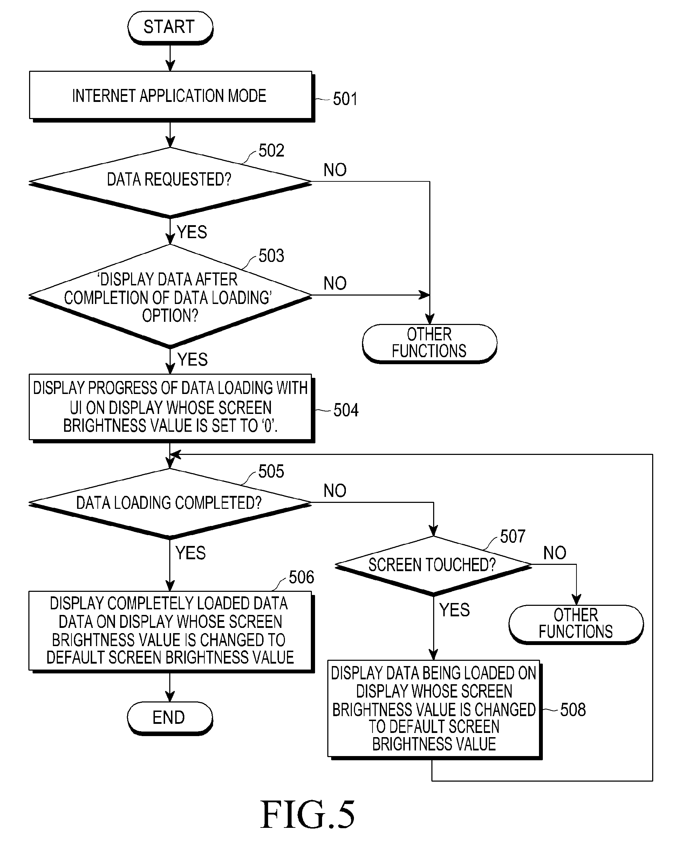

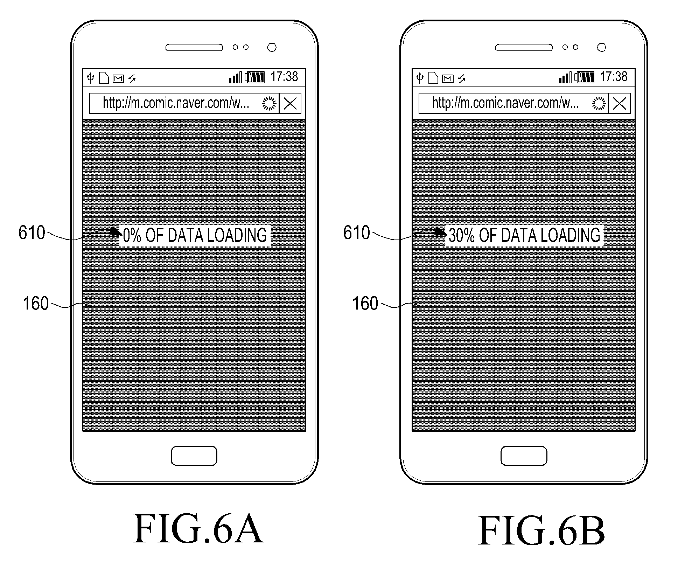

FIG. 5 is a flowchart illustrating a process of controlling a screen during a data loading operation in a terminal according to a second exemplary embodiment of the present invention, and FIGS. 6A to 6E are diagrams for a description of the process in FIG. 5 according to exemplary embodiments of the present invention.
The second exemplary embodiment of the present invention will be described in detail with reference to FIGS. 2, 5 and 6A to 6E.
Referring to FIG. 5, upon request for specific data in the Internet application mode in step 501, the controller 110 determines in step 502 whether specific data is requested. If the specific data is not requested, another function is performed. If the specific data is requested, the controller 110 determines in step 503 whether a 'display data after completion of data loading' option is set in the terminal. In the Internet application mode, a screen brightness value of the display 160 is set to a default screen brightness value.
If the 'display data after completion of data loading' option is not set in the terminal in step 503, another function is performed. If the 'display data after completion of data loading' option is set in the terminal in step 503, the controller 110 blanks the screen of the display 160 by changing the screen brightness value of the display 160 to zero or '0', and displays the progress of data loading in a specific text or image in step 504.
If the data loading is completed while displaying the progress of data loading in a specific text or image on the display 160 whose screen brightness value is set to zero or '0' in step 504, the controller 110 determines in step 505 whether the data loading is completed. If the data loading is completed, the controller 110 changes the screen brightness value of the display 160 back to the default screen brightness value and displays the completely loaded data on the display 160 in step 506. Optionally, if the data loading is completed, the controller 110 may inform the user of the completion of data loading by generating vibrations.
If a touch action occurs on the display 160 while displaying the progress of data loading in a specific text or image on the display 160 whose screen brightness value is set to zero or '0' in step 504, the controller 110 determines in step 507 whether the screen is touched. If the screen is not touched, another function is performed. If the screen is touched, the controller 110 changes the screen brightness value of the display 160 back to the default screen brightness value, and displays the data being loaded on the display 160 in step 508. Thereafter, the controller 110 returns to step 505. Optionally, the controller 110 may inform the user, of its displaying the data being loaded on the display 160 whose screen brightness value is set to the default screen brightness value, by generating vibrations.
While changing the screen brightness value according to the progress of data loading and displaying the data being loaded, during the data loading, the controller 110 may display a rod-shaped progress bar indicating the progress of data loading in a predetermined position (for example, the upper side) of the display 160.
FIGS. 6A to 6E illustrate an operation of changing a screen brightness value to zero or '0' and displaying the progress of data loading in a text during the data loading according to an exemplary embodiment of the present invention.
Upon request for data in the Internet application mode where the screen brightness value of the display 160 is set to the default screen brightness value, the controller 110 blanks the screen of the display 160 by changing the screen brightness value to zero or '0' and displays a text 610 indicating '0% of Data Loading', as shown in FIG. 6A. Thereafter, if the progress of data loading becomes, for example, 30%, with the execution of the data loading operation, the controller 110 displays the text 610 indicating '30% of Data Loading' on the display 160 whose screen brightness value is set to zero or '0', as shown in FIG. 6B.
Subsequently, if the progress of data loading becomes, for example, 50%, then the controller 110 displays the text 610 indicating '50% of Data Loading' on the display 160 whose screen brightness value is set to zero or '0', as shown in FIG. 6C.
Next, if the progress of data loading becomes, for example, 70%, then the controller 110 displays the text 610 indicating '70% of Data Loading' on the display 160 whose screen brightness value is set to zero or '0', as shown in FIG. 6D.
Finally, if the data loading is completed, the controller 110 changes the screen brightness value of the display 160 back to the default screen brightness value and displays the completely loaded data on the display 160 whose screen brightness value is set to the default screen brightness value, as shown in FIG. 6E.
Even in the case of FIGS. 5 and 6A to 6E, the terminal displays only the simple text information on the screen of the display whose screen brightness value is set to zero or '0', during the data loading, so it may further reduce the current consumption compared with the terminal of the related art shown in FIG. 1 that displays the data being loaded, on the screen of the display whose screen brightness value is generally set to the default screen brightness value.
The proposed device and method for controlling a screen according to the data loading in a terminal may be implemented as computer-readable codes in non-transitory computer-readable recording media. The non-transitory computer-readable recording media may include all kinds of recording devices capable of storing data that can be read by computer systems. Examples of the recording media may include a Read-Only Memory (ROM), a Random Access Memory (RAM), an optical disk, a magnetic tape, a floppy disk, a hard disk, a nonvolatile memory and the like. In addition, the non-transitory computer-readable recording media may be distributed over the computer systems connected by the network, in which computer-readable codes may be stored and executed in a distributed manner.
As is apparent from the foregoing description, the proposed device and method for controlling a screen according to the data loading in a terminal may intuitively display the progress of data loading during the data loading and may also reduce the current consumption. In addition, the device and method may control a screen using a User Interface (UI) during data loading so that a user may wait for the completion of the data loading without feeling bored, and may also reduce the current consumption.
While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A device for controlling a screen according to data loading in a terminal, the device comprising:
a display whose screen brightness value is changed step by step while data is being loaded; and
a controller configured to control to change, if data information is requested, a screen brightness value of the display step by step according to progress of data loading, and to control to display the data being loaded, on the display whose screen brightness value is changed step by step.

2. The device of claim 1, wherein, if the data information is requested, the controller is configured to determine whether a 'display a screen that is adjusted according to a progress of data loading' option is set, and controls to change a screen brightness value of the display step by step according to the progress of data loading, if the 'display a screen that is adjusted according to a progress of data loading' option is set, and
wherein, if the data information is requested on the display whose screen brightness value is set to a default screen brightness value, the controller is configured to control to change the screen brightness value to zero (0), and increase the screen brightness value of the display step by step according to the progress of the data loading while displaying the data being loaded.

3. The device of claim 2, wherein, upon completion of the data loading, the controller is configured to control to change the screen brightness value of the display to the default screen brightness value, and to display the completely loaded data on the display.

4. The device of claim 2, wherein, if a touch action occurs on the display while the data is being loaded, the controller is configured to control to change the screen brightness value of the display to the default screen brightness value, and to display the data being loaded, and
wherein, while the data is being loaded, the controller is configured to control to display a progress bar indicating the progress of data loading, in a predetermined area on the display.

5. The device of claim 1, wherein the controller is configured to control to change the screen brightness value of the display step by step according to the progress of data loading by controlling a backlight unit while the data is being loaded.

6. The device of claim 1, wherein the controller is configured to control to change the screen brightness value of the display step by step according to the progress of data loading by adjusting predetermined pixel values applied to the screen of the display step by step while the data is being loaded.

7. The device of claim 1, wherein, if the data information is requested, the controller is configured to determine whether a 'display data after completion of data loading' option is set, control to change the screen brightness value to zero (0), if the 'display data after completion of data loading' option is set, and control to display the progress of data loading with a User Interface (UI) on the display whose screen brightness value is changed to zero (0),
wherein if the data loading is completed, the controller changes the screen brightness value of the display to a default screen brightness value, and displays the completely loaded data on the display.

8. The device of claim 7, wherein the controller is configured to control to display the progress of data loading in a text or an image.

9. The device of claim 7, wherein, if the data loading is completed, the controller is configured to control to change the screen brightness value of the display to a default screen brightness value, and to display the completely loaded data on the display, and
wherein while the data is being loaded, the controller controls to display a progress bar indicating the progress of data loading, in a predetermined area on the display.

10. A method for controlling a screen according to data loading in a terminal, the method comprising:
changing a screen brightness value of a display step by step according to progress of data loading, if data information is requested; and
displaying the data being loaded, on the display whose screen brightness value is changed step by step.

11. The method of claim 10, wherein the changing of the screen brightness value comprises:
determining whether a 'display a screen that is adjusted according to a progress of data loading' option is set, if the data information is requested; and
changing a screen brightness value of the display step by step according to the progress of data loading, if the 'display a screen that is adjusted according to a progress of data loading' option is set.

12. The method of claim 10, wherein the changing of the screen brightness value comprises:
changing the screen brightness value to zero (0), if the data information is requested on the display whose screen brightness value is set to a default screen brightness value; and
increasing the screen brightness value of the display step by step according to the progress of data loading while displaying the data being loaded.

13. The method of claim 10, wherein the changing of the screen brightness value comprises:
changing the screen brightness value of the display step by step according to the progress of data loading by controlling a backlight unit while the data is being loaded;
changing, upon completion of the data loading, the screen brightness value of the display to a default screen brightness value; and
displaying the completely loaded data on the display whose screen brightness value is changed to the default screen brightness value.

14. The method of claim 10, wherein the changing of the screen brightness value comprises:
changing the screen brightness value of the display step by step according to the progress of data loading by adjusting predetermined pixel values applied to the screen of the display step by step while the data is being loaded.

15. The method of claim 10, further comprising:
changing the screen brightness value of the display to a default screen brightness value, if a touch action occurs on the display while the data is being loaded;
displaying the data being loaded, on the display whose screen brightness value is changed to the default screen brightness value; and
displaying a progress bar indicating the progress of data loading, in a predetermined area on the display, while the data is being loaded.

16. The method of claim 10, further comprising:
determining whether a 'display data after completion of data loading' option is set, if the data information is requested;
changing the screen brightness value to zero (0), if the 'display data after completion of data loading' option is set;
displaying the progress of data loading with a User Interface (UI) on the display whose screen brightness value is changed to zero (0);
changing the screen brightness value of the display to a default screen brightness value, if the data loading is completed; and
displaying the completely loaded data on the display whose screen brightness value is changed to the default screen brightness value.

17. The method of claim 16, wherein the progress of data loading is displayed in a text or an image.

18. The method of claim 16, further comprising:
changing the screen brightness value of the display to the default screen brightness value, if a touch action occurs on the display while the data is being loaded;
displaying the data being loaded, on the display whose screen brightness value is changed to the default screen brightness value; and
displaying a progress bar indicating the progress of data loading, in a predetermined area on the display, while the data is being loaded
